# EUROPÄISCHE PATENTSCHRIFT

(11) **EP 2 245 249 B1**
(45) Veröffentlichungstag und Bekanntmachung des Hinweises auf die Patenterteilung: **26.10.2011**
(21) Anmeldenummer: 09714894.4
(22) Anmeldetag: 24.02.2009
(51) Int. Cl.: B60K 15/077, B60K 15/03

(54) **VERFAHREN ZUR SCHLÜSSELLOSEN ZUGANGS- UND/ODER BETÄTIGUNGSBERECHTIGUNGSPRÜFUNG FÜR INSBESONDERE KRAFTFAHRZEUGE UND ZUGEHÖRIGE ZUGANGS- UND/ODER BETÄTIGUNGSEINRICHTUNG**
METHOD FOR KEYLESS ACCESS AND/OR ACTUATION AUTHORIZATION VERIFICATION, PARTICULARLY FOR MOTOR VEHICLES, AND ASSOCIATED ACCESS AND/OR ACTUATION DEVICE
PROCÉDÉ DE CONTRÔLE D'AUTORISATION D'ACCÈS ET/OU D'AUTORISATION DE COMMANDE SANS CLÉ, EN PARTICULIER POUR VÉHICULES À MOTEUR, ET DISPOSITIF D'ACCÈS ET/OU DE COMMANDE CORRESPONDANT

(30) Priorität: 29.02.2008 DE 102008011879
(43) Veröffentlichungstag der Anmeldung: 03.11.2010
(73) Patentinhaber: Huf Hülsbeck & Fürst GmbH & Co. KG, 42551 Velbert (DE)
(72) Erfinder: ZILLER, Boris, 40885 Ratingen (DE); JOSCHKO, Witold, 47906 Kempen (DE)
(86) Internationale Anmeldenummer: PCT/EP2009/001291
(87) Internationale Veröffentlichungsnummer: WO 2009/106287

(56) Entgegenhaltungen:
- DE-A1- 10 046 897
- DE-A1- 19 542 441
- DE-C1- 19 718 764

## Beschreibung

Die Erfindung betrifft ein Verfahren und eine vorrichtung zur schlüssellosen Zugangs- und/oder Betätigungsberechtigungsprüfung für insbesondere Kraftfahrzeuge, wonach mittels zumindest zweier Sendeeinrichtungen jeweils ein erstes und ein zweites elektromagnetisches Feld erzeugt werden, wonach sich ferner die beiden Felder in einem Überlappbereich zumindest teilweise überlappen, und wonach ein bedienerspezifischer Datenträger zur Messung der Feldstärke und Abfrage durch eine Auswerteeinheit eingerichtet ist.

Die schlüssellose Zugangs- und/oder Betätigungsberechtigungsprüfung bei Kraftfahrzeugen wird allgemein als "Keyless-Entry-System" bezeichnet. Hier kommt es zu einem Datenaustausch zwischen dem von einer zutrittswilligen Person meistens mitgeführten bedienerspezifischen Datenträger und der kraftfahrzeugseitigen Auswerteeinheit. Stellt die Auswerteeinheit in diesem Zusammenhang fest, dass die zutrittswillige Person berechtigt ist, das Kraftfahrzeug zu öffnen, so gibt sie den Zugang durch beispielsweise Entriegeln der Kraftfahrzeugtürverschlüsse frei.

Ähnlich wie die zuvor beschriebene Zugangsberechtigungsprüfung funktioniert die Betätigungsberechtigungsprüfung. Diese Überprüfung stellt beispielsweise sicher, dass ein Bediener auch tatsächlich berechtigt ist, das Kraftfahrzeug zu starten. Die angesprochene Zugangs- und/oder Betätigungsberechtigungsprüfung wird bei aktiven Systemen beispielsweise dadurch eingeleitet, dass die betreffende Person manuell durch Betätigen eines Tasters die Abfrage startet. Dieser Taster kann sich auf oder an dem bedienerspezifischen Datenträger befinden.

Demgegenüber zeichnen sich passive Keyless-Entry-Systeme dadurch aus, dass die Abfrage indirekt eingeleitet wird, beispielsweise indem sich der zutrittswillige Bediener dem Kraftfahrzeug nähert, einen Türgriff betätigt oder in den Aktionsbereich eines Näherungssensors eintritt. Ebenso ist es möglich, die passive Abfrage daran zu knüpfen, dass sich die zutrittswillige Person mit ihrem bedienerspezifischen Datenträger in den Bereich des von der einen oder den beiden Sendeeinrichtungen erzeugten elektromagnetischen Feldes begibt und anhand der gemessenen Feldstärke der Abfragezyklus gegebenenfalls unter Berücksichtigung von Schwellwerten gestartet wird.

Im Stand der Technik werden vielfältige Ausgestaltungen solcher Zugangsund/oder Betätigungsberechtigungsprüfungsroutinen beschrieben. So greift die EP 1 083 280 B1 auf eine schlüssellose Betätigungs- und/oder Schließeinrichtung zurück, bei welcher die fahrzeugseitige Sende-/Empfangseinheit mit einer Sende-/Empfangsantenneneinrichtung ausgerüstet ist. Diese verfügt über drei oder mehr räumlich angeordnete Einzelantennen, um auf jeden Fall einen störungsfreien bidirektionalen Datenaustausch in sämtlichen drei Raumrichtungen zu gewährleisten.

Der Stand der Technik nach der DE 10 2005 013 910 B3 greift auf wenigstens zwei räumlich verschieden angeordnete fahrzeugseitige Antennen zurück. Diese senden jeweils zeitlich unabhängig voneinander ein elektromagnetisches Signal aus, welches von dem bedienerspezifischen Datenträger gemessen wird. Gleichzeitig senden die beiden fahrzeugseitigen Antennen ein elektromagnetisches Signal aus, welches ebenfalls von dem bedienerspezifischen Datenträger erfasst wird. Auf diese Weise soll eine erhöhte Sicherheit gegenüber Manipulationen Dritter gewährleistet werden.

Der Stand der Technik hat sich grundsätzlich bewährt, stößt jedoch dann an Grenzen, wenn zusätzlich die Position des bedienerspezifischen Datenträgers für die einwandfreie Funktionsweise benötigt wird. Beispielsweise ist es denkbar, dass der bedienerspezifische Datenträger sowohl für die schlüssellose Zugangsberechtigungsprüfung für das Entriegeln als auch für die Betätigungsberechtigungsprüfung zum Starten des Kraftfahrzeuges eingesetzt werden soll.

Um diese Anforderung möglichst manipulationssicher darstellen zu können, ist es notwendig, dass die Betätigungsberechtigungsprüfung bzw. das Starten des Kraftfahrzeuges ausschließlich daran geknüpft wird, dass sich der bedienerspezifische Datenträger zusammen mit der Bedienperson im Innern des Kraftfahrzeuges befindet. Denn ansonsten macht eine zusätzliche Prüfung keinen Sinn. An dieser Stelle schlägt die EP 1 081 316 A1 bereits eine Positionserkennung für Funkschlüssel vor. Dabei wird innerhalb eines vorgegebenen Bereiches auf Antennen zurückgegriffen, welche den Bereich abdecken.

Um nun die Position des bedienerspezifischen Datenträgers zu erfassen, werden von den Antennen in zeitversetzter Folge Signale abgegeben. Nach Empfang eines solchen Reizsignals gibt der Funkschlüssel ein Schlüsseisignal ab. Die Schlüsselsignale werden nun von den Antennen aufgefangen und aus dem Verhältnis der Signalstärken der an den Antennen ankommenden Schlüsselsignale kann auf die Position des Schlüssels bzw. Datenträgers zwischen den Antennen geschlossen werden. Ähnlich geht auch die DE 10 2005 013 910 B3 vor, die ebenfalls die Feldstärke des von den Antennen ausgesandten elektromagnetischen Feldes misst.

Anliche Systeme schlagen auch die DE 195 42 441, DE 197 18 764 und die DE 100 46 897 vor.Die DE 197 18 764 C1 nennt dabei den gattungsbildenden Stand der Technick.

Eine solche Feldstärkemessung ist naturgemäß mit Problemen behaftet, die sich nicht nur durch die zerklüftete Topologie einer Kraftfahrzeugkarosserie erklären, sondern auch dadurch, dass der Innenraum durch möglicherweise Anoder Einbauten eine Veränderung erfährt, welche die Feldstärke beeinflusst. Außerdem ist der Aufbau relativ komplex und erfordert in der Regel die exakte Positionierung der Antennen und ihr Einmessen auf den jeweiligen Kraftfahrzeugtyp. Das ist einer flexiblen Anbringung am Kraftfahrzeug abträglich und im Hinblick auf die zunehmende Typenvielfalt nachteilig.

Der Erfindung liegt das technische Problem zugrunde, ein derartiges Verfahren bzw. Vorrichtung so weiter zu entwickeln, dass die Funktionssicherheit bei gleichzeitig verringertem konstruktiven und finanziellem Aufwand zumindest beibehalten, wenn nicht sogar gesteigert wird. Zugleich soll eine entsprechend gestaltete schlüssellose Zugangs- und/oder Betätigungseinrichtung geschaffen werden.

Zur Lösung dieser technischen Problemstellung ist ein gattungsgemäßes Verfahren bzw Vorrichtung im Rahmen der Erfindung **dadurch gekennzeichnet, dass** die Sendeeinrichtungen so beaufschlagt werden, dass sich zumindest das elektromagnetische Feld im Überlappbereich zur einwandfreien räumlichen Ortung des Datenträgers ändert.

Im Rahmen der Erfindung werden also die von den beiden Antennen bzw. Sendeeinrichtungen erzeugten elektromagnetischen Felder in gewissen Zeitabständen geändert. Dabei greift die Erfindung regelmäßig auf eine Änderung der Feldrichtung zurück, wohingegen die Feldstärke im Wesentlichen gleich bleibt. Selbstverständlich kann grundsätzlich auch die Feldstärke eine Änderung erfahren. Regelmäßig wird jedoch das von der jeweiligen Sendeeinrichtung erzeugte elektromagnetische Feld lediglich hinsichtlich seiner Feldrichtung geändert, und zwar in gewissen Zeitabständen. Diese Zeitabstände lassen sich vorgeben und beispielsweise in einer Auswerteeinheit ablegen.

Dabei wird im Allgemeinen die Auslegung so gewählt, dass die Feldlinien des von den beiden Sendeeinrichtungen im Überlappbereich erzeugten Feldes entweder parallel oder entgegengesetzt zueinander verlaufen und zwischen diesen beiden Zuständen ein Wechsel nach einem vorgegebenen Zeitmuster erfolgt. Als Folge hiervon korrespondieren die parallel zueinander im Überlappbereich verlaufenden Feldlinien zu einer dortigen Feldverstärkung im Vergleich zum Außenbereich außerhalb des Überlappbereichs, wohingegen die entgegengesetzt verlaufenden Feldlinien im Überlappbereich zu einer Felddämpfung im Vergleich zum Außenbereich führen.

Das heißt, die beiden Sendeeinrichtungen werden so positioniert und ausgelegt, dass in dem Überlappbereich zwischen ihnen entweder eine Feldverstärkung oder Felddämpfung nach einem bestimmten zeitlichen Muster im Vergleich zum Bereich außerhalb beobachtet wird. Dadurch lässt sich der Datenträger problemlos räumlich orten, nämlich indem zwischen dem Überlappbereich und dem Außenbereich einfach unterschieden werden kann. Denn das im Überlappbereich vorhandene elektromagnetische Feld ändert sich entsprechend dem vorgegebenen zeitlichen Muster, wohingegen der Außenbereich von der Feldstärke her praktisch gleich bleibt.

In der Regel handelt es sich bei den beiden Sendeeinrichtungen um Niederfrequenz-Antennen. Diese erzeugen regelmäßig ein elektromagnetisches Feld im Radiofrequenzbereich mit beispielsweise einer Frequenz zwischen 10 kHz und einem MHz. Üblicherweise wird der Bereich zwischen 30 kHz und 300 kHz abgedeckt. Wenn nun die beiden Sendeeinrichtungen bzw. NiederfrequenzAntennen mit einem solchen elektromagnetischen Wechselfeld beaufschlagt werden und so im oder am Kraftfahrzeug ausgerichtet sind, dass sie im Überlappbereich entweder parallel oder entgegengesetzt zueinander ausgerichtete Feldlinien erzeugen, so lässt sich der beschriebene Effekt problemlos darstellen und beobachten. Denn im Überlappbereich kommt es mit der Frequenz des ang elegten Wechselfeldes zu einer regelmäßigen Feldverstärkung und Feldschwächung, wohingegen im Außenbereich die Feldstärke praktisch gleich bleibt. Auf diese Weise ist es problemlos und mit einfachen Mitteln möglich, zwischen dem Überlappbereich und dem Außenbereich zu unterscheiden.

Denn der Überlappbereich ist durch eine mit der Frequenz der Sendeeinrichtungen variierende Feldverstärkung und Felddämpfung gekennzeichnet, wohingegen im Außenbereich die Feldstärke gleich bleibt. Als Folge hiervon kann der bedienerspezifische Datenträger nicht nur zur Zugangsberechtigungsprüfung bei Annäherung an das Kraftfahrzeug und die im Kraftfahrzeug befindliche Auswerteeinheit genutzt werden, sondern eignet sich unabhängig hiervon auch zur Betätigungsberechtigungsprüfung, beispielsweise zur Startberechtigungsprüfung. Diese wird nur dann überhaupt zugelassen, wenn sich der Bediener zusammen mit dem bedienerspezifischen Datenträger im Innern des Kraftfahrzeuges befindet, was mit Hilfe der beschriebenen Überprüfungsroutine unschwer festgestellt werden kann. Hierin sind die wesentlichen Vorteile zu sehen.

Wie bereits erläutert, fällt der Überlappbereich im Wesentlichen mit dem Karosserieinnenraum zusammen, wohingegen der Außenbereich den Karosserieaußenraum darstellt. Es hat sich bewährt, wenn die beiden Sendeeinrichtungen symmetrisch im Vergleich zu einer Karosserielängsachse angeordnet sind und jeweils elektromagnetische Felder im Wesentlichen gleicher Feldstärke und Ausdehnung erzeugen. Tatsächlich stellt nämlich diese Auslegung sicher, dass bei im Wesentlichen parallel verlaufenden Feldlinien die Feldstärke nahezu doppelt so groß wie im Außenbereich gemessen wird, wohingegen bei entgegengesetzt verlaufenden Feldlinien die Feldstärke auf nahezu Null absinkt.

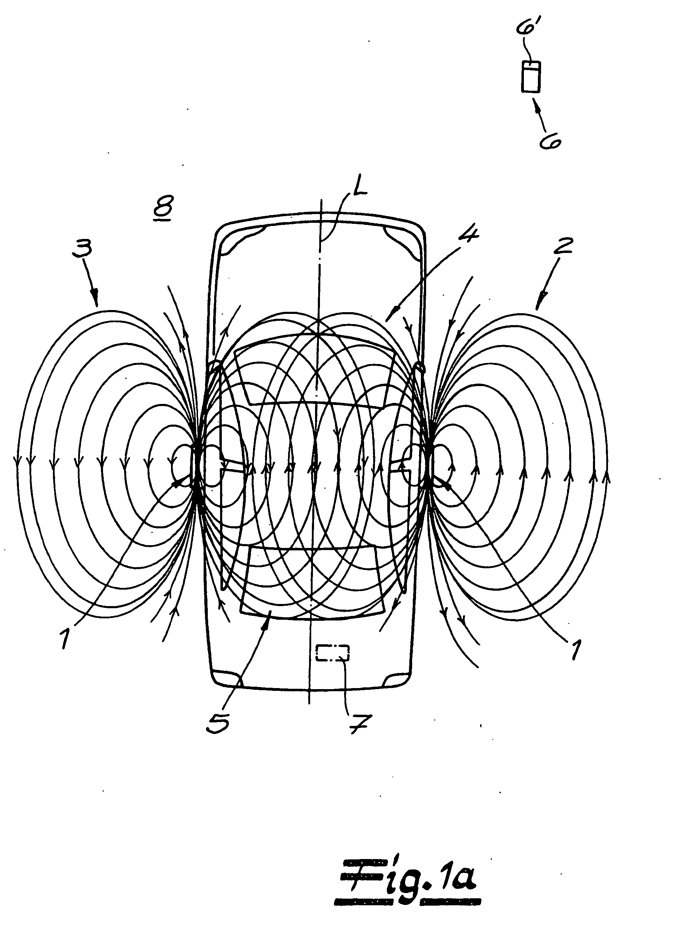

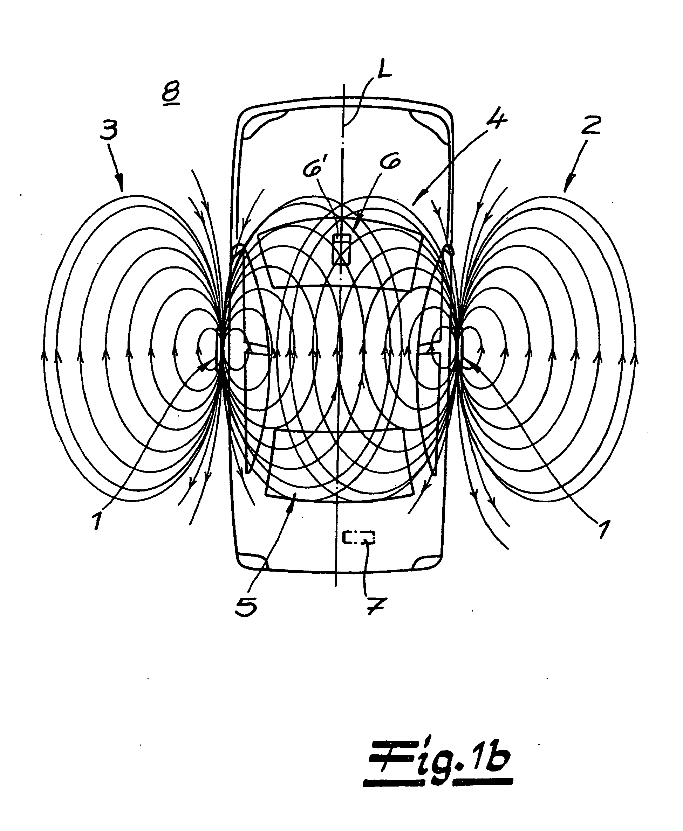

Im Folgenden wird die Erfindung anhand einer lediglich ein Ausführungsbeispiel darstellenden Zeichnung näher beschrieben. Die beiden Fig. 1a und 1b zeigen ein Kraftfahrzeug, welches mit der erfindungsgemäßen schlüssellosen Zugangs- und/oder Betätigungseinrichtung zur Berechtigungsprüfung ausgerüstet ist, und zwar in verschiedenen Funktionszuständen.

In den Figuren ist eine schlüssellose Zugangs- und/oder Betätigungseinrichtung dargestellt, welche zur Berechtigungsprüfung bei einem Kraftfahrzeug eingesetzt wird. Zu diesem Zweck verfügt die dargestellte Einrichtung über wenigstens zwei Sendeeinrichtungen 1, die vorliegend jeweils als Niederfrequenz(LF)Antennen ausgebildet sind und im Radiofrequenzbereich emittieren. Folglich gehen von den beiden Sendeeinrichtungen 1 Radiowellen meistens im kHz-Bereich aus, wie dies schematisch und im Schnitt in den Fig. 1a und 1b dargestellt ist. Man erkennt jeweils die sich infolge der Hertzschen Dipole bildenden Feldlinien.

Die beiden Sendeeinrichtungen 1 erzeugen jeweils ein erstes elektromagnetisches Feld 2 und ein zweites elektromagnetisches Feld 3. Die beiden elektromagnetischen Felder 2, 3 überlappen sich zumindest teilweise in einem Überlappbereich 4.

Tatsächlich sind die beiden Sendeeinrichtungen 1 symmetrisch im Vergleich zu einer Karosserielängsachse L und im Wesentlichen parallel hierzu angeordnet. Als Folge hiervon kommt es zwischen den beiden Sendeeinrichtungen 1 zur Ausbildung des Überlappbereiches 4, der im Querschnitt eine im Wesentlichen elliptische Grundform aufweist. Dabei ist die Auslegung so getroffen, dass der Überlappbereich 4 größtenteils mit einem Fahrzeuginnenraum 5 deckungsgleich ist. Das erklärt sich aufgrund der Tatsache, dass die Feldlinien im Kraftfahrzeuginnenraum 5 größtenteils nicht gedämpft werden, allerdings im Heckund Frontbereich durch die dortigen Metallansammlungen eine mehr oder minder ausgeprägte Dämpfung erfahren.

Mit den beiden Sendeeinrichtungen 1 wechselwirkt ein bedienerspezifischer Datenträger 6. Dieser bedienerspezifische Datenträger 6 ist vorliegend passiv ausgelegt. Das heißt, sobald der Datenträger 6 in den Einflussbereich bzw. das Feld der zugehörigen Sendeeinrichtung 1 gelangt, findet ein bidirektionaler Datenaustausch mit einer im Kraftfahrzeug angeordneten Auswerteeinheit 7 statt. Am Ende dieses Datenaustausches und der damit verbundenen Berechtigungsprüfung wird das Kraftfahrzeug beispielsweise entriegelt.

Um zusätzlich und unabhängig hiervon eine Berechtigungsprüfung durchzuführen, welche den Start des Kraftfahrzeuges ermöglicht, muss festgestellt werden, ob sich der bedienerspezifische Datenträger 6 und mit ihm der Bediener im Kraftfahrzeuginnenraum 5 befindet. Zu diesem Zweck wird das elektromagnetische Feld im Überlappbereich 4 gemessen und zur einwandfreien räumlichen Ortung des Datenträgers 6 ausgewertet. Tatsächlich ist der Datenträger 6 mit einer integrierten Messeinrichtung 6' ausgerüstet, welche in der Lage ist, die Feldstärke des elektromagnetischen Feldes zu ermitteln.

Diese Feldstärkemessung mit der Messeinrichtung 6' startet bei Annäherung an das Kraftfahrzeug die bereits beschriebene Zugangsberechtigungsprüfung respektive den bidirektionalen Datenaustausch, wenn ein bestimmter Schwellwert für die Feldstärke überschritten wurde. Zugleich kann mit Hilfe der Messeinrichtung 6' ermittelt werden, ob sich der zugehörige Datenträger 6 im Innern des Kraftfahrzeuges, das heißt im Kraftfahrzeuginnenraum 5 oder außerhalb, das heißt im Außenbereich 8 bzw. Karosserieaußenraum, befindet.

Diese Unterscheidung lässt sich einfach treffen, weil die Sendeeinrichtungen 1 bzw. Niederfrequenzantennen im Überlappbereich 4 und folglich im Kraftfahrzeuginnenraum 5 Feldlinien erzeugen, die entweder parallel entsprechend der Darstellung nach Fig. 1b oder entgegengesetzt zueinander verlaufen, wie dies die Fig. 1a zeigt. Der Wechsel zwischen dem größtenteils parallelen Feldlinienverlauf nach Fig. 1b und dem überwiegend entgegengesetzten Feldlinienverlauf nach Fig. 1a geschieht dabei mit der Radiofrequenz, mit welcher die jeweiligen Sendeeinrichtungen 1 parallel zueinander bzw. gemeinsam beaufschlagt werden, beispielsweise von der Auswerteeinheit 7.

Als Folge hiervon stellt sich im Überlappbereich 4 mit parallelen Feldlinien entsprechend der Fig. 1b eine im Vergleich zum Bereich außerhalb des Fahrzeuginnenraumes 5 nahezu doppelte Feldliniendichte ein, die auch zu einer praktisch verdoppelten Feldstärke korrespondiert. Verlaufen die Feldlinien dagegen entsprechend der Fig. 1a entgegengesetzt, so addiert sich die Feldstärke im Überlappbereich 4 auf Werte von nahezu Null. Auch in diesem Fall liegt eine deutliche Abweichung der Feldstärke im Überlappbereich 4 im Vergleich zum Außenbereich 8 vor und kann problemlos identifiziert werden.

Jedenfalls findet ein ständiger Wechsel zwischen einer Feldverstärkung entsprechend der Fig. 1b und einer Felddämpfung nach Fig. 1a statt, und zwar mit der Radiofrequenz. Dieser Wechsel der Feldstärke kann mit Hilfe der Messeinrichtung 6' im Datenträger 6 unschwer erfasst werden. Im übrigen unterscheidet sich die Feldstärke im Überlappbereich 4 von derjenigen außerhalb des Kraftfahrzeuges, die praktisch konstant bleibt, weil sich die Feldliniendichte nicht ändert.

Die beiden Sendeeinrichtungen 1 bzw. Niederfrequenz-Antennen 1 können beispielsweise in einem Türaußengriff, einer Karosseriesäule, einer Kraftfahrzeugtür oder dergleichen angeordnet sein, finden sich jedenfalls an oder in der Außenhaut der zugehörigen Kraftfahrzeugkarosserie. Dabei reicht es aus, auf simple Ferrit-Antennen mit oder ohne Kern zurückzugreifen und ist deren Ausrichtung im Raum relativ unkritisch, solange zumindest im Überlappbereich 4 dafür gesorgt ist, dass sich an dieser Stelle die Feldlinien wie skizziert überlappen.

## Patentansprüche

1. Verfahren zur schlüssellosen Zugangs- und/oder Betätigungsberechtigungsprüfung für insbesondere Kraftfahrzeuge, wonach mittels zumindest zweier Sendeeinrichtungen ( 1 ) jeweils ein erstes elektromagnetisches Feld ( 2 ) und ein zweites elektromagnetisches Feld ( 3 ) erzeugt werden, wonach sich ferner die beiden Felder ( 2 , 3 ) in einem Überlappbereich ( 4 ) teilweise überlappen, und wonach ein bedienerspezifischer Datenträger ( 6 ) zur Messung der Feldstärke und Abfrage durch eine Auswerteeinheit ( 7 ) eingerichtet ist,
**dadurch gekennzeichnet,**
**dass** die beiden Sendeeinrichtungen ( 1 ) so beaufschlagt werden, dass sich die Feldstärke des elektromagnetischen Feldes im Überlappbereich ( 4 ) zeitlich ändert während im Außenbereich ( 8 ) außerhalb des Überlappbereichs ( 4 ) die Feldstärke gleich bleibt, und
**dass** auf Grundlage der gemessenen Feldstärke eine Feststellung getroffen wird, ob sich der Datenträger ( 6 ) im Überlappbereich ( 4 ) oder im Außenbereich ( 8 ) befindet.

2. Verfahren nach Anspruch 1, **dadurch gekennzeichnet, dass** die Feldlinien des von den beiden Sendeeinrichtungen (1) im Überlappbereich (4) erzeugten elektromagnetischen Feldes im Wesentlichen parallel oder entgegengesetzt zueinander verlaufen.

3. Verfahren nach Anspruch 1 oder 2, **dadurch gekennzeichnet, dass** zur ranmlichen Ortung des Datenträgers (6) wenigstens zwischen dem Überlappbereich (4) und einem Außenbereich (8) unterschieden wird.

4. Verfahren nach einem der Ansprüche 1 bis 3, **dadurch gekennzeichnet, dass** der Überlappbereich (4) im Wesentlichen mit einem Karosserieinnenraum (5) und der Außenbereich (8) mit einem Karosserieaußenraum zusammenfallen.

5. Verfahren nach einem der Ansprüche 1 bis 4, **dadurch gekennzeichnet, dass** die beiden Sendeeinrichtungen (1) symmetrisch im Vergleich zu einer Karosserietängsachse (L) angeordnet sind und jeweils elektromagnetische Felder im Wesentlichen gleicher Feldstärke und Ausdehnung erzeugen.

6. Schlüssellose Zugangs- und/oder Betätigungseinrichtung zur Berechtigungsprüfung bei insbesondere Kramahrzeugen zur Durchführung des Verfahrens nach einem der Ansprüche 1 bis 5, mit zumindest zwei Sendeeinrichtungen (1), die jeweils ein erstes elektromagnetisches Feld (2) und ein zweites elektromagnetisches Feld (3) erzeugen, wobei sich die beiden Felder (2, 3) in einem Überlappbereich (4) teilweise überlappen und wobei ein bedienerspezifischer Datenträger (6) zur Messung der Feldstarke, und Abfrage durch eine Auswerteeinheit (7) eingerichtet ist, **dadurch gekennzeichnet, dass** die beiden Sendeeinrichtungen (1) alternierende elektromagnetische Felder erzeugen, wobei sich du Felastirke Übenappbereich (4) zeitlich ändert und somit eine Feststellung ermöglicht, ob sich der Datenträger (6) im Überlappbereich oder im Außenbereich (8) befindet.

7. Zugangs- und/oder Betätigungseinrichtung nach Anspruch 6, **dadurch gekennzeichnet, dass** die beiden Sendeeinrichtungen (1) in oder an der Karosserie angeordnet sind, und zwar symmetrisch im Vergleich zu dessen Längsachse (L).

8. Zugangs- und/oder Betätigungseinrichtung nach Anspruch 6 oder 7, **dadurch gekennzeichnet, dass** die beiden Sendeeinrichtungen (1) jeweils in einem Türaußengriff, einer Karosseriesäule, einer Kramahrzeugtür oder an oder in der Außenhaut der zugehörigen Kraftfahrzeugkarosserie angeordnet sind.

9. Zugangs- und/oder Betätigungseinrichtung nach einem der Ansprüche 6 bis 8, **dadurch gekennzeichnet, dass** die beiden Sendeeinrichtungen (1) als im Radiofrequenzbereich emittierende LF-Antennen ausgebildet sind.

10. Zugangs- und/oder Betätigungseinrichtung nach einem der Ansprüche 6 bis 9, **dadurch gekennzeichnet, dass** der Überlappbereich (4) im Querschnitt eine elliptische Grundform aufweist.

## Claims

1. A method for keyless access and/or actuation authorization verification, particularly for motor vehicles, according to which by means of at least two transmission devices (1) respectively a first electromagnetic field (2) and a second electromagnetic field (3) are generated, according to which in addition the two fields (2, 3) partially overlap each other in an overlapping region (4), and according to which an operator-specific data carrier (6) is arranged for measuring the field intensity and for querying by an evaluation unit (7),
**characterized in that**
the two transmission devices (1) are acted upon such that the field intensity of the electromagnetic field changes chronologically in the overlapping region (4), whereas in the outer region (8) outside the overlapping region (4) the field intensity remains the same, and
that on the basis of the measured field intensity, an identification is made as to whether the data carrier (6) is situated in the overlapping region (4) or in the outer region (8).

2. The method according to Claim 1, **characterized in that** the field lines of the electromagnetic field which is generated by the two transmission devices (1) in the overlapping region (4) run substantially parallel or opposed to each other.

3. The method according to Claim 1 or 2, **characterized in that** for the three-dimensional locating of the data carrier (6), a differentiation is made at least between the overlapping region (4) and an outer region (8).

4. The method according to one of Claims 1 to 3, **characterized in that** the overlapping region (4) substantially coincides with a body interior (5), and the outer region (8) with a body exterior.

5. The method according to one of Claims 1 to 4, **characterized in that** the two transmission devices (1) are arranged symmetrically with respect to a body longitudinal axis (L) and respectively generate electromagnetic fields of substantially identical field intensity and extent.

6. A keyless access and/or actuation device for authorization verification in particular in motor vehicles, for carrying out the method according to one of Claims 1 to 5, with at least two transmission devices (1) which respectively generate a first electromagnetic field (2) and a second electromagnetic field (3), wherein the two fields (2, 3) partially overlap each other in an overlapping region (4), and wherein an operator-specific data carrier (6) is arranged for measuring the field intensity and for querying by an evaluation unit (7), **characterized in that** the two transmission devices (1) generate alternating electromagnetic fields, wherein the field intensity in the overlapping region (4) changes chronologically and therefore makes possible an identification as to whether the data carrier (6) is situated in the overlapping region or in the outer region (8).

7. The access and/or actuation device according to Claim 6, **characterized in that** the two transmission devices (1) are arranged in or on the body, and namely symmetrically with respect to its longitudinal axis (L).

8. The access and/or actuation device according to Claim 6 or 7, **characterized in that** the two transmission devices (1) are respectively arranged in an external door handle, a body column, a motor vehicle door or on or in the outer skin of the associated motor vehicle body.

9. The access and/or actuation device according to one of Claims 6 to 8, **characterized in that** the two transmission devices (1) are constructed as LF antennae emitting in the radio frequency range.

10. The access and/or actuation device according to one of Claims 6 to 9, **characterized in that** the overlapping region (4) has an elliptical basic shape in cross-section.

## Revendications

1. Procédé pour tester l'autorisation d'accès et/ou de commande sans code pour en particulier des véhicules automobiles, selon lequel à chaque fois un premier champ (2) électromagnétique et un second champ (3) électromagnétique sont générés au moyen d'au moins deux dispositifs d'émission (1), selon lequel également les deux champs (2, 3) se chevauchent partiellement dans une zone de chevauchement (4) et selon lequel un support de données (6) spécifique à l'opérateur est aménagé pour la mesure de l'intensité de champ et l'interrogation par une unité d'analyse (7), **caractérisé en ce que**
les deux dispositifs d'émission (1) sont alimentés de telle sorte que l'intensité de champ du champ électromagnétique dans la zone de chevauchement (4) varie dans le temps, alors que l'intensité de champ reste identique dans la zone extérieure (8) en dehors de la zone de chevauchement (4), et
**en ce que**, sur la base de l'intensité de champ mesurée, on constate si le support de données (6) se trouve dans la zone de chevauchement (4) ou dans la zone extérieure (8).

2. Procédé selon la revendication 1, **caractérisé en ce que** les lignes de champ du champ électromagnétique généré par les deux dispositifs d'émission (1) dans la zone de chevauchement (4) sont agencées sensiblement parallèlement entre elles ou dans le sens opposé.

3. Procédé selon la revendication 1 ou 2, **caractérisé en ce que**, pour la localisation dans l'espace du support de données (6), on fait la différence au moins entre la zone de chevauchement (4) et une zone extérieure (8).

4. Procédé selon l'une quelconque des revendications 1 à 3, **caractérisé en ce que** la zone de chevauchement (4) et la zone extérieure (8) coïncident sensiblement respectivement avec un espace intérieur de carrosserie (5) et avec un espace extérieur de carrosserie.

5. Procédé selon l'une quelconque des revendications 1 à 4, **caractérisé en ce que** les deux dispositifs d'émission (1) sont disposés de façon symétrique par rapport à un axe longitudinal de carrosserie (L) et génèrent respectivement des champs électromagnétiques d'intensité et d'extension sensiblement identiques.

6. Dispositif d'accès et/ou de commande sans code pour tester l'autorisation sur en particulier des véhicules automobiles pour mettre en oeuvre le procédé selon l'une quelconque des revendications 1 à 5, comprenant au moins deux dispositifs d'émission (1), qui génèrent respectivement un premier champ électromagnétique (2) et un second champ électromagnétique (3), les deux champs (2, 3) se chevauchant partiellement dans une zone de chevauchement (4) et un support de données (6) spécifique à l'opérateur étant équipé pour la mesure de l'intensité de champ et l'interrogation par une unité d'analyse (7), **caractérisé en ce que** les deux dispositifs d'émission (1) génèrent des champs électromagnétiques alternatifs, l'intensité de champ dans la zone de chevauchement (4) variant dans le temps, ce qui permet donc de constater si le support de données (6) se trouve dans la zone de chevauchement ou dans la zone extérieure (8).

7. Dispositif d'accès et/ou de commande selon la revendication 6, **caractérisé en ce que** les deux dispositifs d'émission (1) sont disposés dans ou sur la carrosserie, et ce de façon symétrique par rapport à son axe longitudinal (L).

8. Dispositif d'accès et/ou de commande selon la revendication 6 ou 7, **caractérisé en ce que** les deux dispositifs d'émission (1) sont disposés respectivement dans une poignée extérieure de porte, une colonne de carrosserie, une porte de véhicule automobile ou sur ou dans l'enveloppe extérieure de la carrosserie de véhicule spécifique.

9. Dispositif d'accès et/ou de commande selon l'une quelconque des revendications 6 à 8, **caractérisé en ce que** les deux dispositifs d'émission (1) sont conçus sous forme d'antennes LF émettant dans la plage de radiofréquences.

10. Dispositif d'accès et/ou de commande selon l'une quelconque des revendications 6 à 9, **caractérisé en ce que** la zone de chevauchement (4) présente en section une forme de base elliptique.
